Europäisches Patentamt

European Patent Office

Office européen des brevets

(19)

(11) Numéro de publication : **0 278 815 B1**

(12)

# FASCICULE DE BREVET EUROPEEN

(45) Date de publication du fascicule du brevet :
**03.04.91 Bulletin 91/14**

(51) Int. Cl.⁵ : **B23K 9/02,** B23K 9/26,
B23K 9/12

(21) Numéro de dépôt : **88400114.0**

(22) Date de dépôt : **20.01.88**

(54) **Procédé de soudage à l'arc en chanfrein étroit et dispositif pour sa mise en oeuvre.**

(30) Priorité : **29.01.87 FR 8701043**

(43) Date de publication de la demande :
**17.08.88 Bulletin 88/33**

(45) Mention de la délivrance du brevet :
**03.04.91 Bulletin 91/14**

(84) Etats contractants désignés :
**CH DE GB IT LI SE**

(56) Documents cités :
**DE-A- 3 136 526**
**FR-A- 2 163 435**

(56) Documents cités :
**FR-A- 2 514 280**
**GB-A- 1 187 363**
**US-A- 1 571 924**
**US-A- 3 567 900**

(73) Titulaire : **ETAT-FRANCAIS représenté par le DELEGUE GENERAL POUR L'ARMEMENT (DPAG)**
**Bureau des Brevets et Inventions de la Délégation Générale pour l'Armement 26, Boulevard Victor**
**F-75996 Paris Armées (FR)**

(72) Inventeur : **Baujat, M. Vincent**
**42, rue Loysel**
**F-50100 Cherbourg (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé de soudage en chanfrein étroit et un appareil permettant la mise en oeuvre de ce procédé.

Cette invention s'applique aux techniques de soudage à l'arc sous gaz protecteur à électrode consommable et plus particulièrement au soudage dit en chanfrein étroit toutes positions (position à plat, verticale et plafond).

On connait divers procédé de soudage, décrits par exemple les brevets FR-A-2 514 280 et US-A-3 567 900 et dans le brevet FR-A-2 163 435.

Le premier document présente un procédé de soudage, en chanfrein étroit ou faible écartement à fil préformé sous forme d'onde et un appareil permettant la mise en oeuvre de ce procédé. Son avantage est d'éviter les défauts du type manque de fusion, l'origine de ces défauts étant le manque de mobilité de l'extrémité de l'électrode.

En effet, à cause de l'importance du rapport entre la hauteur du chanfrein et sa largeur, il est impossible d'incliner le porte-électrode de sorte que celui-ci dirige l'arc électrique vers les parois des pièces à souder. Il apparaît ainsi des zones de discontinuités, ou manques de matière, entraînant une fragilisation de l'ensemble préjudiciable à une bonne tenue mécanique.

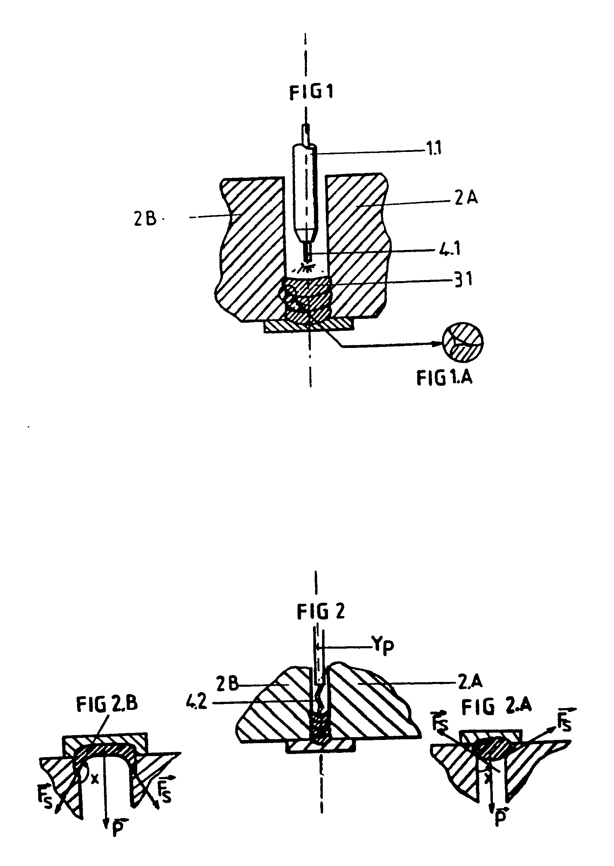

La figure 1 est une illustration de ce procédé de soudage classique. Le porte électrode 1.1 est disposé entre les deux pièces à souder 2.A et 2.B, l'électrode 4.1 dépose un cordon de soudure 3.1. La figure 1.A est une mise en évidence du défaut type manque de fusion, tandis que la figure 2 est une vue en coupe du dispositif connu décrit dans le document FR-A-2 514 280.

Afin de pallier à cet inconvénient, il est présenté une solution qui consiste à donner au fil-électrode un profil déformé spécial. Ce profil, obtenu par déformation plastique, se présente sous une forme ondulée avec un pas et une amplitude prédéterminée. Il en résulte que l'extrémité de l'électrode oscille en même temps qu'elle se consomme. Cette oscillation, quelles que soient les applications présentées, se produit toujours alternativement vers l'un, puis vers l'autre bord des pièces destinées à être soudées et de part et d'autre d'un axe principal Yp toujours parallèle au bord d'une des pièces ou à l'axe du porte-électrode.

Cependant, cette solution a pour inconvénient majeur de ne pas être adaptée à la position de soudage au plafond.

En effet, la géométrie d'un cordon de soudure déposé dans un chanfrein est considérée comme correcte lorsque l'angle de raccordement entre la surface libre du cordon et le bord de la pièce est supérieur à 90°. Ceci permet une refusion suffisante du cordon par le cordon suivant lors des passes ultérieures, or dans la solution présentée, la combinaison de la gravité d'une part, et des tensions superficielles du bain de fusion d'autre part, engendre inévitablement un angle de raccordement x inférieur à 90° et donc une géométrie inacceptable.

La figure 2.B illustre une représentation du résultat recherché dans les conditions du soudage en position plafond, présentant un angle de raccordement x supérieur à 90° tandis que la figure 2A est une représentation du résultat obtenu, présentant alors un angle de raccordement x inacceptable. Le résultat figure 2.B est donc physiquement impossible à obtenir avec ce procédé, le cordon de soudure n'étant pas en équilibre.

Le brevet FR-A-2 163 435 montre un procédé et un appareil d'entraînement de fil de soudure.

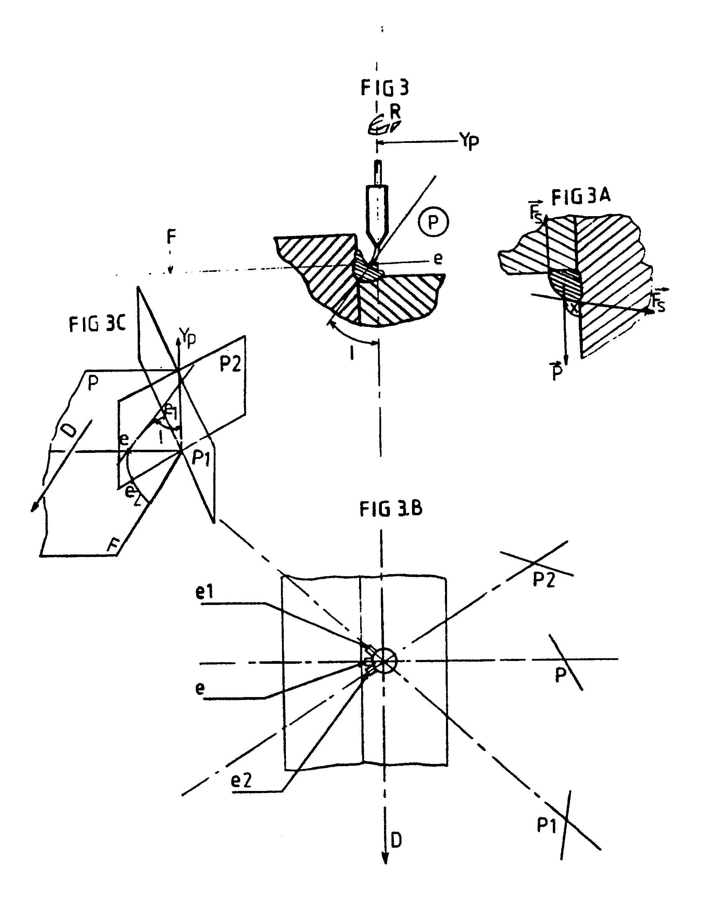

La solution proposée dans ce procédé, illustrée figure 3, est de donner au fil-électrode une certaine incurvation de sorte que l'extrémité de celui-ci soit orientable dans la direction d'une des pièces à souder.

Cette extrémité est donc inclinée par rapport au bord d'une des pièces à souder dans le plan P perpendiculaire à l'avance D du porte-électrode 1.3 d'un angle I qui doit être constant.

La figure 3.A est une représentation du résultat obtenu avec ce procédé en position plafond.

Son avantage est donc de permettre le dépôt d'un cordon de soudure dont la géométrie et la dimension du bain sont compatibles avec le soudage en toutes positions. Cependant, l'inconvénient de ce procédé est de ne jamais garantir parfaitement l'absence de défaut de type manque de fusion car l'extrémité de l'électrode ne peut être maintenue mécaniquement dans un plan P, perpendiculaire à l'avance D.

En effet, à cause de contraintes résiduelles internes existant au sein du fil de soudure, celui-ci tourne en oscillant autour de l'axe principal Yp.

Cette rotation R a pour conséquence directe de ne jamais garantir la parfaite perpendicularité du plan P, défini par l'extrémité de l'électrode et et l'axe Yp, par rapport à l'avance D.

La figure 3.B illustre en vue de dessus cet inconvénient.

La figure 3.C est une perspective des différents plans et axes définis ci-dessus.

L'extrémité e prend au cours de l'opération de soudage, successivement et d'une façon aléatoire, les positions e1 et e2 définissant ainsi des plans P1 et P2 alors inadaptés au besoin de perpendicularité du plan P par rapport à l'avance D.

Le brevet DE-A-3 136 526 décrit un dispositif de soudage à chanfrein étroit présentant un moteur supplémentaire extérieur pour la mise en rotation du tube guide-fil afin d'obtenir l'oscillation du fil électrode. Mais ce dispositif nécessite une inclinaison de la torche, c'est-à-dire du tube guide-fil, pour déposer un cordon de type "angle", ce qui présente les inconvénients de l'élargissement du chanfrein ou de la réduction de sa profondeur. Par ailleurs, le tube contact est coudé, ce qui augmente son usure.

Le but de l'invention est donc de permettre le soudage en toutes positions tout en évitant les défauts de type manque de fusion et en assurant une mise en oeuvre simplifiée du tube guide-fil.

L'invention a donc pour objet un procédé pour le soudage électrique par dépôt de cordons successifs entre une première pièce et une deuxième pièce, en regard l'une de l'autre et espacées par un chanfrein étroit, présentant au moins un fil-électrode et un tube guide-fil avançant à l'intérieur du chanfrein, où l'extrémité du fil-électrode, en coopérant avec le tube guide-fil, oscille de façon connue dans un plan perpendiculaire à l'avance caractérisé en ce que l'électrode oscille aussi de façon dissymétrique dans ce plan, de part et d'autre d'une droite moyenne presentant une inclinaison par rapport à l'axe du tube guide-fil.

Selon une autre caractéristique, le fil-électrode se présente sous une forme d'onde périodique présentant un rayon de courbure moyen inférieur à 0,4 m, la période de l'onde étant inférieure à 0,2 m.

Ce procédé présente de nombreux avantages.

Il permet d'associer les effets positifs des deux réalisations connues décrites précédemment. En effet, le fil oscille d'un bord de la pièce au cordon précédent et il est maintenu dans un plan perpendiculaire à la vitesse d'avance de la torche comme dans le procédé du brevet FR-A-2 514 280 mais il dépose un cordon de géométrie analogue à celui déposé par le procédé du brevet FR-A-2 163 435.

Le procédé selon l'invention permet donc d'effectuer un soudage dans toutes les positions et sans manque de fusion.

La description qui suit, en référence au dessin annexé, présente, un mode de réalisation de l'invention, les figures 1 à 3 illustrant les réalisations connues décrites plus haut.

La figure 4 est une vue en coupe du type de soudure réalisé grâce au procédé selon l'invention.

La figure 5 est une vue en section du tube-contact.

La figure 6 est une vue de côté d'un fil-électrode mis en oeuvre dans le procédé selon l'invention, obtenu à la sortie du tube-contact en l'absence de source électrique.

La figure 7 est une vue schématique du dispositif permettant la mise en oeuvre du procédé.

Les figures 8 à 10 représentent quelques profils de dentures des engrenages pouvant être utilisés dans le dispositif selon l'invention.

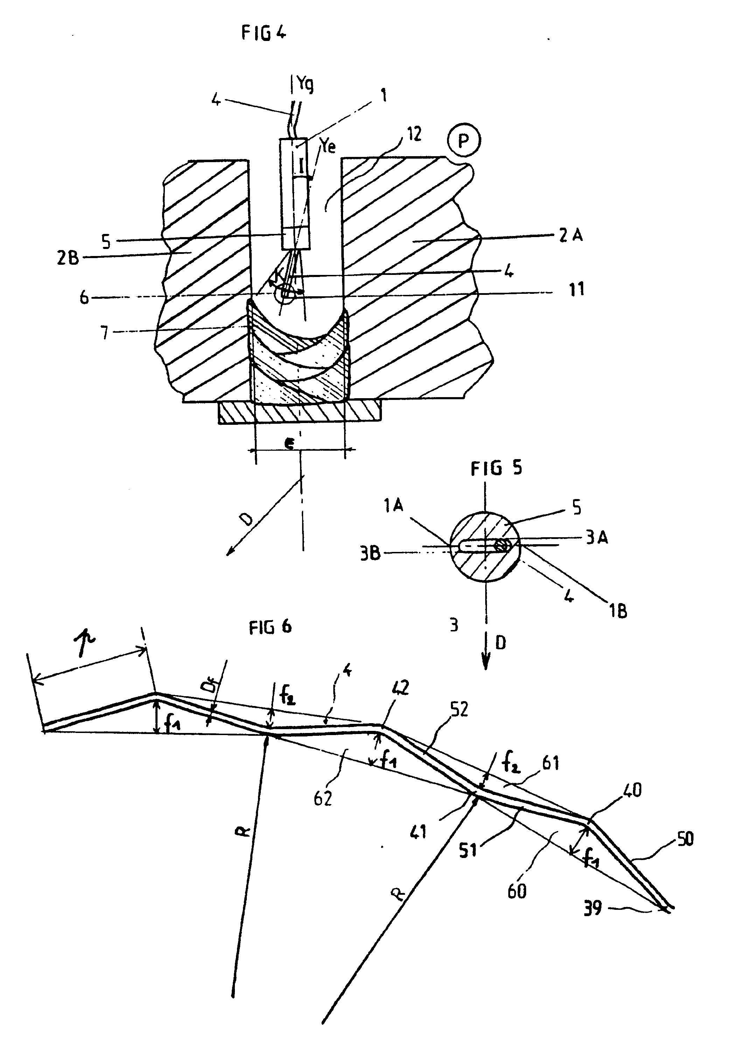

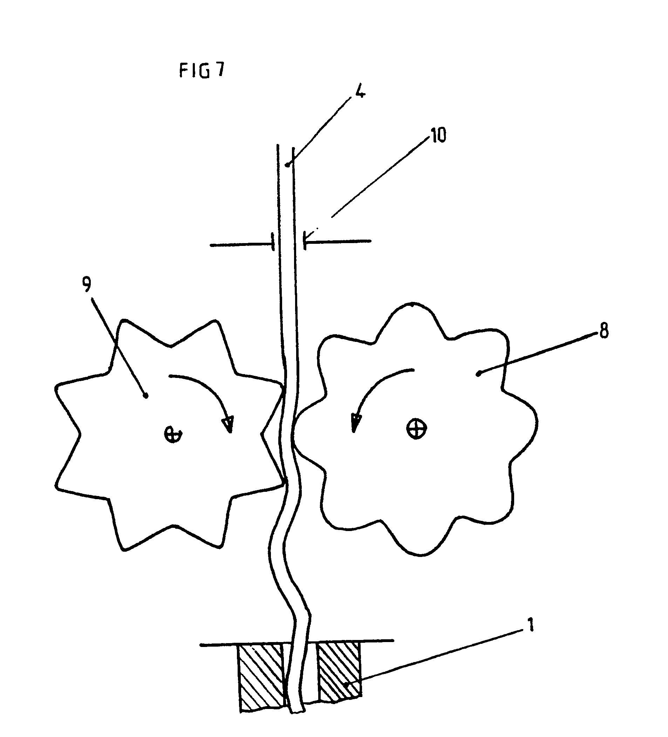

Selon la figure 4, le tube guide-fil 1 est disposé entre les pièces à souder 2A et 2B se faisant face, étroitement espacées afin de minimiser la durée de l'opération de soudage formant ainsi un chanfrein étroit 12 de largeur E.

A l'extrémité du tube guide-fil 1 est fixé de façon classique un tube contact 5 qui, selon la figure 5, présente un orifice 3 de forme oblongue présentant ainsi deux surfaces planes 3A et 3B parallèles entre elles et perpendiculaires à l'avance D du tube guide-fil.

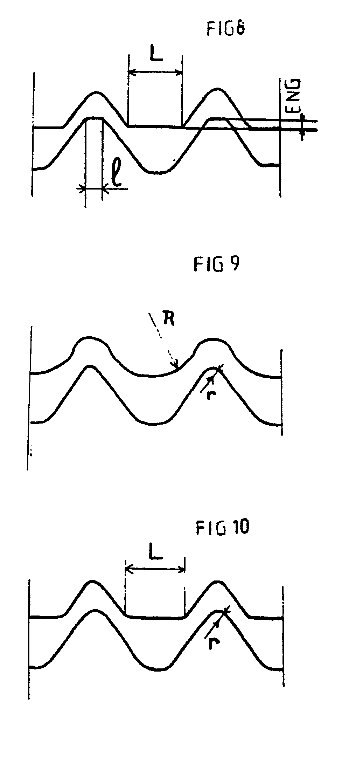

Un fil-électrode 4, représenté figure 6, est inséré à l'intérieur du tube guide-fil et glisse lors de l'opération de soudage à l'intérieur de la forme oblongue du tube-contact.

Ce fil-électrode, ayant une forme plane, il coopère avec les plans 3A et 3B du tube-contact assurant ainsi le maintien de l'extrémité de l'électrode dans le plan d'oscillation P.

L'électrode 4 reçoit une énergie électrique, dont l'origine est une alimentation de type classique, par l'intermédiaire du tube contact 5.

De façon connue, cette énergie génère un arc électrique entre l'extrémité 6 de l'électrode et la pièce à souder, créant ainsi une fusion du matériau constitutif de l'électrode et de la pièce recevant le cordon, l'électrode en se consommant déposant ainsi le matériau en fusion.

Selon l'invention, le fil-électrode présente dans le prolongement de ses parties droites (50, 51, 52,...) des points (39, 40, 41,...), formant trois à trois et de part et d'autre du fil-électrode des triangles isocèles (60, 61, 62,...), chacun constitué par une base et par une hauteur, cette dernière étant appelée flèche.

Le fil-électrode est conçu de sorte qu'il présente d'un côté une flèche f1 et de l'autre une flèche f2, l'une étant inégale à l'autre. Ainsi, celui-ci possède un rayon de courbure R du côté de la flèche la plus grande.

En se consommant, l'extrémité de l'électrode oscille de part et d'autre d'un axe Ye grâce à son profil de ligne brisée, l'axe Ye étant incliné d'un angle I prédéterminé par rapport à l'axe principal Yg du tube guide-fil grâce au rayon de courbure R.

Cette oscillation se produit du bord d'une des pièces au cordon précédent sans jamais atteindre le bord de la pièce opposée.

Ainsi, grâce à l'association du mouvement d'avance D du tube guide-fil et de l'oscillation de l'extrémité de l'électrode dans un plan perpendiculaire à cette avance, on dépose un cordon 7 prenant appui sur l'un des deux bords 2B ou 2A des pièces à souder et sur les deux cordons précédents.

Peuvent être associés, l'un derrière l'autre, deux ou plusieurs tubes guide-fil avec chacun leur électrode et leur alimentation, un seul tube guide-fil pouvant suffire mais il lui devrait alors faire une rotation de 180 ° autour de son axe Yg en bout de chanfrein.

Les cordons déposés sont donc du type cordons d'angles.

La géométrie de ces cordons correspond aux exigences du soudage toutes positions, et garantit grâce à l'agitation du bain, au mouvement alternatif du bord de la pièce au cordon précédent, et au guidage du tube-contact, une absence des défauts du type manque de fusion.

Pour des applications courantes de soudage sous atmosphère active ou inerte, des buses de géométrie adaptées sont introduites dans le chanfrein en avant et en arrière du tube. Elles débitent du gaz capable de protéger l'arc de l'air ambiant et permettent ainsi de donner une bonne compacité au cordon.

Le profil spécial de l'électrode consommable est obtenu grâce à un appareil comprenant un système d'engrenage et un guidage de l'électrode en amont des deux engrenages.

La figure 7 est une représentation en élévation de ce dispositif.

Ce dispositif permet une déformation plastique du fil-électrode par formage ainsi que son entrainement. Le fil-électrode 4 est disposée au travers d'un diaphragme d'entrée 10 permettant de la diriger entre deux roues dentées 8 et 9 formant un engrenage à axes parallèles dont la rotation est synchronisée par un dispositif moteur de type classique. Le diaphragme d'entrée 10 assure une bonne tenue latérale du fil-électrode et permet un meilleur rendement du dispositif de formage. Il évite le battement du fil-électrode dû aux actions alternativement opposées des dents contre lui et améliore ainsi leur prise en évitant les phénomènes de glissement.

Après avoir été formé, le fil-électrode se place à l'intérieur du tube guide-fil et du tube-contact, pour ensuite se dévider à la sortie de ce dernier.

Les axes des engrenages sont perpendiculaires à la direction d'arrivée du fil et leur distance est réglable par un dispositif connu du type vis-écrou. Les roues dentées sont positionnées de façon à ce que les dents de l'une viennent en vis-à-vis des creux de l'autre tout en ménageant un léger espace entre elles afin de laisser passer le fil. Ces roues dentées ont la particularité de présenter des profils différents de sorte que deux flèches consécutives obtenues sur le fil-électrode soient inégales. La distancenentre axe des roues dentées varie comme l'engagement ENG de l'engrenage. Cette variation permet de faire évoluer la valeur des flèches f1 et f2 du fil-électrode afin de moduler l'amplitude k d'oscillation. On constate que cette évolution des flèches se fait à f1-f2 quasi constante, impliquant une variation de R presque nulle et garantissant ainsi une position quand même constante de l'axe Ye grâce à la formule suivante obtenue par approximation :

$$R = \frac{P^2}{f1-f2}$$

Les figures 8 à 10 illustrent une série de profils selon l'invention.

La figure 8 montre des roues tronquées à leurs extrémités, présentant ainsi des méplats dont les longueurs respectives L et l sont différentes : Df étant le diamètre du fil électrode, L peut être compris entre 0,5 Df et 20 Df et l entre 0,1 Df et 3 Df.

La figure 9 représente les profils de deux roues dont les extrémités sont arrondies à des rayons R et r différents, R pouvant varier entre 2 Df et 30 Df et r entre 0,1 Df et 3 Df.

La figure 10 représente une combinaison des deux formes précédentes avec un premier profil arrondi dont le rayon r est compris entre 0,1 Df et 3 Df et un deuxième profil en forme de méplat dont la longueur L est comprise entre 0,5 Df et 20 Df.

Un mode préféré de réalisation du dispositif selon l'invention présente les valeurs suivantes :

Largeur du chanfrein e = 10 mm

Diamètre du fil électrode Df = 1,2 mm

Longueur de chaque segment P = 10 mm

Distance d'engagement ENG = 1 mm

Flèche fl = 1 mm

Rayon r = 1 mm (cas selon la fig 10)

Angle d'oscillation l compris entre 5 et 30°

Evolution de la flèche f2 et du rayon de courbure R en mm en fonction de la limite élastique Re du fil-électrode et de la longueur L du méplat :

| L en mm | Re en Mpa | | | | |
|---|---|---|---|---|---|
| | 0,5 | 1 | 1,5 | 2 | |
| 500 | 0,8 | 0,7 | 0,7 | 0,6 | f2 |
| | 500 | 400 | 330 | 250 | 2R |
| 700 | 0,8 | 0,8 | 0,7 | 0,7 | f2 |
| | 600 | 450 | 360 | 290 | 2R |

## Revendications

1. Procédé pour le soudage électrique par dépôt de cordons successifs entre une première pièce (2A) et une deuxième pièce (2B), en regard l'une de l'autre et espacées par un chanfrein étroit (12), présentant au moins un fil-électrode (4) et un tube guide-fil (1) avançant à l'intérieur du chanfrein, où l'extrémité (6) du fil-électrode, en coopérant avec le tube guide-fil, oscille de façon connue dans un plan (P) perpendiculaire à l'avance (D), caractérisé en ce que l'électrode oscille aussi de façon dissymétrique dans ce plan, de part et d'autre d'une droite moyenne (Ye) présentant une inclinaison (I) par rapport à l'axe (Yg) du tube guide-fil.

2. Procédé selon la revendication 1, caractérisé en ce que le fil-électrode (4) se présente sous une forme d'une onde périodique possédant un rayon de courbure moyen R inférieur à 0,4 m, et en ce que la période de cette onde est inférieure à 0,2 m.

3. Dispositif permettant le formage et l'entrainement du fil-électrode, pour la mise en oeuvre du procédé défini dans les revendications 1 ou 2, comprenant deux roues dentées (8) et (9) synchronisées en rotation formant un engrenage à axes parallèles et perpendiculaires à la direction d'arrivée du fil, dispositif caractérisé en ce que les roues dentées présentent des profils non superposables pour la réalisation d'un fil-électrode se présentant sous la forme d'onde périodique possédant un rayon de courbure moyen R inférieur à 0,4 m et une période inférieure à 0,2 m.

4. Dispositif selon la revendication 4, caractérisé en ce qu'un diaphrame d'entrée (10) du fil-électrode est disposé en amont des roues dentées afin de maintenir le fil électrode dans une position constante.

5. Dispositif selon la revendication 4, caractérisé en ce que les dents d'une des roues ont leurs sommets tronqués.

6. Dispositif selon la revendication 4, caractérisé en ce que les extrémités des dents de chaque roue sont arrondies à des rayons différents.

7. Dispositif selon la revendication 4, caractérisé en ce que les dents d'une des roues ont leurs sommets tronqués et en ce que les extrémités des dents de l'autre sont arrondies.

8. Dispositif de formage et d'entrainement d'un fil-électrode, comprenant deux roues dentées (8) et (9) synchronisées en rotation, formant un engrenage à axes parallèles et perpendiculaires à la direction d'arrivée du fil, caractérisé en ce que les roues dentées présentent des profils différents et,

a) les roues sont tronquées à leurs extrémités et présentent des méplats dont les longueurs respectives L et l sont différentes : si Df est le diamètre du fil électrode, L est compris entre 0,5 Df et 20 Df et l entre 0,1 Df et 3 Df ou,

b) les profils de deux roues ont les extrémités arrondies avec des rayons R et r différents, R variant entre 2 Df et 30 Df et r entre 0,1 Df et 3 Df, ou

c) une combinaison des deux formes a) et b) précédentes avec un premier profil arrondi dont le rayon r est compris entre 0,1 Df et 3Df et un deuxième profil en forme de méplat dont la longueur L est comprise entre 0,5 Df et 20 Df.


## Ansprüche

1. Verfahren für das Elektroschweißen durch Absetzen von übereinanderliegenden Schweißlagen zwischen zwei gegenüberliegenden und durch einen Engspalt (12) getrennten ersten (2A) bzw. zweiten (2B) Werkstücken, bestehend aus mindestens einer Drahtelektrode (4) und einem im Innern des Engspaltes vorrückenden Lenkröhrchen (1), wobei die Spitze (6) der Drahtelektrode in Mitwirkung mit dem Lenkröhrchen nach einer bekannten Bewegung in einer zur Vorrückrichtung senkrechten Ebene (P) schwingt, dadurch gekennzeichnet, daß die Drahtelektrode auch asymmetrisch in dieser Ebene beiderseits einermittleren Gerade (Ye) schwingt, die um den Winkel (I) in Bezug auf die Achse (Yg) des Lenkröhrchens geneigt ist.

2. Verfahren nach Anspruch 1, dadurch gekennzeichnet, daß die Drahtelektrode (4) als periodische Welle mit einem mittleren Krümmungsradius R unter 0,4 m und einer Wellenlänge von weniger als 0,2 m vorgerückt wird.

3. Vorrichtung zur Formung und zum Antrieb der Drahtelektrode für den Einsatz des in den Ansprüchen 1 oder 2 festgelegten Verfahrens, bestehend aus zwei in ihrer Drehbewegung synchronisierten Zahnrädern (8) und (9), die ein Zahnradpaar mit parallelen und zur Schubrichtung der Drahtelektrode senkrechten Achsen darstellen, Vorrichtung dadurch gekennzeichnet, daß die Zahnräder nichtüberlagernde Profile für die Formung einer wellenförmigen Drahtelektrode mit einem mittleren Krümmungsradius R unter 0,4 m und einer Wellenlänge von weniger als 0,2 m aufweisen.

4. Vorrichtung nach Anspruch 3, dadurch gekennzeichnet, daß eine vor den Zahnrädern eingebaute Eintrittsblende (10) die Drahtelektrode in einer unveränderlichen Lage hält.

5. Vorrichtung nach Anspruch 3, dadurch gekennzeichnet, daß die Zähne eines Rades stumpfe Kegelspitzen aufweisen.

6. Vorrichtung nach Anspruch 3, dadurch gekennzeichnet, daß die Spitze der Zähne eines jeden Rades mit unterschiedlichen Radien abgerundet sind.

7. Vorrichtung nach Anspruch 3, dadurch gekennzeichnet, daß die Spitze der Zähne eines Rades abgestumpft und die Spitzen des anderen Rades mit unterschiedlichen Radien abgerundet sind.

8. Vorrichtung zur Formung und zum Antrieb der Drahtelektrode bestehend aus zwei in ihrer Drehbewegung synchronisierten Zahnrädern (8) und (9), die ein Zahnradpaar mit parallelen und zur Schubrichtung der Drahtelektrode senkrechten Achsen darstellen, dadurch gekennzeichnet, daß die Zahnräder unterschiedliche Profile aufweisen, zwar :

a) mit abgestumpften Kegelspitzen und Anflachungen unterschiedlicher Längen L bzw. l : entspricht Df dem Durchmesser der Drahtelektrode, so liegt L zwischen 0,5 Df und 20 Df sowie l zwischen 0,1 Df und 3 Df, oder

b) mit abgerundeten Profilen auf beiden Rädern, deren unterschiedlichen Radien R zwischen 2 Df und 30 Df und r zwischen 0,1 Df und 3 Df liegen, oder

c) mit einer Kombination beider erwähnter Formen a) und b) bestehend aus einem ersten abgerundeten Profil, dessen Radius r zwischen 0,1 Df und 3 Df liegt, und einem zweiten abgestumpften Profil, dessen Anflachungslänge L zwischen 0,5 Df und 20 Df liegt.


## Claims

1. A method of electrical welding by deposition of successive beads between a first member (2A) and a second member (2B) facing each other and separated by a narrow bevel (12), having at least one electrode wire (4) and one wire guide-tube (1) advancing inside the bevel, characterized in that the end (6) of the electrode wire, in cooperation with the wire guide-tube, oscillates in a known manner in a plane (P) perpendicular to the feed direction (D), characterized in that the electrode also oscillates dissymmetrically in that plane on both sides of an average straight line (Ye) at an angle (I) with the axis (Yg) of the wire guide-tude.

2. A method as described in claim 1, characterized in that the electrode wire (4) appears in the form of a periodic wave having an average radius of curvature R smaller than 0.4 m, and in that the period of this wave is less than 0.2 m.

3. An apparatus designed to form and drive the electrode wire for implementing the method described in claims 1 or 2, comprising two toothed wheels (8) and (9) synchronized in rotation, forming a gear the axes of which are parallel and perpendicular to the wire feed direction, an apparatus characterized in that the profiles of the toothed wheels cannot be superimposed for producing an electrode wire appearing in the form of a periodic wave having an average radius of curvature R smaller than 0.4 m and a period less than 0.2 m.

4. An apparatus as described in claim 3, characterized in that a diaphragm (10) intended for feeding the electrode wire is disposed above the toothed wheels in order to keep the electrode wire in a constant position.

5. An apparatus as described in claim 3, characterized in that the teeth of one wheel have truncated apexes.

6. An apparatus as described in claim 3, characterized in that the teeth of one wheel are rounded off according to different radü.

7. An apparatus as described in claim 3, characterized in that the teeth of one wheel have truncated apexes and in that the tips of the teeth of the other wheel are rounded off.

8. An apparatus designed to form and drive an electrode wire, comprising two toothed wheels (8) and (9) synchronized in rotation, forming a gear the axes of which are parallel and perpendicular to the wire feed direction, characterized in that the profiles of the tooth wheels are different and :

a) the wheels have truncated tips and present flats the respective lengths L an l of which are different : if Df is the diameter of the electrode wire, L varies from 0.5 Df to 20 Df and l from 0.1 Df to 3 Df, or

b) the profiles of the two wheels have rounded off tips with different radü R and r, R varying from 2 Df to 30 Df and r from 0.1 Df to 3 Df, or

c) a combination of the two shapes a) and b) described above with a first rounded-off profile the radius r of which varies from 0.1 Df to 3 Df and a second profile in the form of a flat the length L of which varies from 0.5 Df to 20 Df.

FIG 1

1.1
2A
2B ·
4.1
3.1

FIG 1.A

FIG 2

Yp
2B
4.2
2.A

FIG 2.B

FIG 2.A

$\vec{F_S}$
$\vec{F_S}$
$\vec{P}$

8

FIG 3

FIG 3A

FIG 3C

FIG 3B

FIG 4

FIG 5

FIG 6

FIG 7

FIG 8

FIG 9

FIG 10